(19) Europäisches Patentamt
European Patent Office
Office européen des brevets

(11) Publication number: 0 361 506 A2

# (12) EUROPEAN PATENT APPLICATION

(21) Application number: 89118039.0

(22) Date of filing: 29.09.89

(51) Int. Cl.5: C08K 13/02 , C08K 5/00 , C08L 27/12 , //(C08K13/02, 5:14,5:00,3:00),(C08K5/00,5:00, 5:00,5:14)

(30) Priority: 30.09.88 JP 248713/88
30.09.88 JP 248714/88

(43) Date of publication of application:
04.04.90 Bulletin 90/14

(84) Designated Contracting States:
DE FR GB IT

(71) Applicant: DAIKIN INDUSTRIES, LIMITED
Umeda Center Building, 4-12, Nakazaki-nishi
2-chome, Kita-ku
Osaka-shi, Osaka-fu(JP)

(72) Inventor: Furukawa, Yasuyoshi
24-21, Higashikohrien-cho
Neyagawa-shi Osaka-fu(JP)
Inventor: Tokuhira, Katsusada
2-18-14, Kikawa Nishi Yodogawa-ku
Osaka-shi Osaka-fu(JP)

(74) Representative: Hansen, Bernd, Dr.rer.nat. et al
Hoffmann, Eitle & Partner Patentanwälte
Arabellastrasse 4 Postfach 81 04 20
D-8000 München 81(DE)

## (54) Crosslinkable composition of fluorine-containing elastomer.

(57) A crosslinkable composition comprising:

(a) a fluorine-containing elastomer having iodine or bromine,

(b) an organic peroxide

(c) a polyfunctional compound and

(d) an additive selected from the group consisting of a silver compound and a combination of an organic base and a porous filler, which provides a crosslinked material having good heat resistance and small compression set.

EP 0 361 506 A2

# CROSSLINKABLE COMPOSITION OF FLUORINE-CONTAINING ELASTOMER

## BACKGROUND OF THE INVENTION

### Field of the Invention

The present invention relates to a crosslinkable composition of a fluorine-containing elastomer. More particularly, the present invention relates to a crosslinkable composition comprising a fluorine-containing elastomer which has iodine or bromine, an organic peroxide and a polyfunctional compound.

### Description of the Related Art

Among elastomers, fluorine-containing elastomers have the best heat resistance, but further increase of heat resistance is desired. Since the fluorine-containing elastomers are often used as sealing materials, they are required to have small compression set (CS).

A crosslinked material of a peroxide crosslinking composition of the fluorine-containing elastomer has better chemical resistance and mechanical properties than those crosslinked with other crosslinking agents such as polyols and polyamines. However, the peroxide crosslinked elastomer has larger CS than that crosslinked with the polyols.

It is known that the addition of an organic base such as a quaternary ammonium salt to the peroxide crosslinkable composition of the fluorine-containing elastomer increases a crosslinking rate (cf. Japanese Patent Kokai Publication No. 209950/1982). However, the addition of the organic base slightly increases CS of the crosslinked material at high temperatures.

## SUMMARY OF THE INVENTION

One object of the present invention is to provide a crosslinkable composition of a fluorine-containing elastomer having iodine or bromine, which composition provides a crosslinked material having improved heat resistance.

Another object of the present invention is to provide a crosslinkable composition of a fluorine-containing elastomer containing iodine or bromine, which composition provides a crosslinked material having small compression set.

According to the present invention, there is provided a crosslinkable composition comprising:

(a) a fluorine-containing elastomer having iodine or bromine,

(b) an organic peroxide

(c) a polyfunctional compound and

(d) an additive selected from the group consisting of a silver compound and a combination of an organic base and a porous filler.

## DETAILED DESCRIPTION OF THE INVENTION

As the fluorine-containing elastomer, any of the conventionally used elastomers can be used. Preferably, the fluorine-containing elastomer is a copolymer of 20 to 85 % by mole of vinylidene fluoride and at least one other fluorine-containing ethylenically unsaturated monomer and has 0.01 to 5 % by weight of iodine or 0.05 to 1.5 % by weight of bromine.

One of the typical fluorine-containing elastomer is a copolymer of:

(i) 50 to 95 % by mole of repeating units derived from a fluoroolefin of the formula:

$CF_2=CXY$ (I)

wherein X and Y are the same or different and each a fluorine atom or a chlorine atom,

(ii) 50 to 5 % by mole of repeating units derived from a perfluoro(vinyl ether) of the formula:

$CF_2=CFO[CF_2CFX'-(CF_2)_m-O]_nR_f$ (II)

wherein $R_f$ is a perfluoroalkyl group having 1 to 12 carbon atoms, $X'$ is a fluorine atom or a trifluoromethyl group, n is an integer of 0 to 5, and m is 0 or 1,

(iii) 0 to 10 % by mole of repeating units of an alkyl vinyl ether of the formula:
$CF_2 = CFO[CF_2CF(CF_3)O]_lR_f'-Y'$ (III)
wherein $R_f'$ is a perfluoroalkylene group having 1 to 12 carbon atoms or a perfluorophenylene group, Y' is -COOR in which R is an alkyl group having 1 to 4 carbon atoms, -CN, -F, -Cl, -Br or -I, and l is an integer of 1 to 3, which preferably contains 0.01 to 5 % by weight of iodine.

The iodine atoms may be introduced in the fluorine-containing elastomer by copolymerizing the monomers in the presence of an iodine-containing compound of the formula:
$R_f''I_z$ (IV)
wherein $R_f''$ is a saturated or unsaturated fluorohydrocarbon or chlorofluorohydrocarbon group, z is a valency of $R_f''$ and usually 1 or 2. To introduce the bromine atoms in the polymer, a bromine-containing compound such ss fluorine-containing olefin is added to the polymerization system.

The preparation of such the fluorine-containing elastomers is disclosed in U.S. Patent Nos. 4,243,770 and 4,035,565 the disclosures of which are hereby incorporated by reference, and Japanese Patent Kokai Publication No. 125491/ 1978 and Japanese Patent Publication No. 1585/ 1979.

Specific examples of the other fluorine-containing ethylenically unsaturated monomer are tetrafluoroethylene, chlorotrifluoroethylene, trifluoroethylene, vinyl fluoride, hexafluoropropylene, pentafluoropropylene, perfluoro($C_1$-$C_3$-alkyl vinyl ether) and a fluoroalkoxy vinyl ether of the formula:
$X''O(CFY''CF_2O)CF = CF_2$ (V)
wherein X'' is a perfluoroalkyl group having 1 to 3 carbon atoms, ω-hydroperfluoroalkyl having 1 to 3 carbon atoms or ω-chloroperfluoroalkyl group having 1 to 3 carbon atoms, and Y'' is a hydrogen atom, a chlorine atom, a trifluoromethyl group, a difluoromethyl group or a chlorodifluoromethyl group. Among the fluorine-containing elastomers, those comprising 15 to 60 % by mole of the perfluoro(methyl vinyl ether) and the fluoroalkoxy vinyl ether (V) are preferred.

Examples of the iodine-containing compound (IV) and bromine-containing olefins are described in Japanese Patent Kokai Publication No. 125491/1978 and Japanese Patent Publication No. 1585/1979. Preferred iodine-containing compounds are 2-iodoperfluoropropane, 1,4-diiodoperfluorobutane and 4-iodoperfluorobutene-1. Preferred bromine-containing olefins are bromotrifluoroethylene and 4-bromo-3,3,4,4-tetrafluorobutene-1.

As the organic peroxide (b), any organic peroxide which liberates a peroxy radical under crosslinking conditions can be used. Specific examples of the organic peroxide are 1,1-bis(tert.-butylperoxy)-3,5,5-trimethylcyclohexane, 2,5-dimethylhexane-2,5-dihydroxyperoxide, di-tert.-butylperoxide, tert.-butylcumylperoxide, dicumylperoxide, α,α'-bis(tert.-butylperoxy)-p-diisopropylbenzene, 2,5-dimethyl-2,5-di(tert.-butylperoxy)hexane, 2,5-dimethyl-2,5-di(tert.-butylperoxy)hexine-3, benzoylperoxide, tert.-butylperoxybenzene, 2,5-dimethyl-2,5-di(benzoylperoxy)hexane, tert.-butylperoxymaleic acid, tert.-butylperoxyisopropyl carbonate and the like.

The kind and amount of the organic peroxide are selected according to the content of -O-O- groups, its decomposition temperature and the like. Generally, the amount of the organic peroxide is from about 0.5 to 5 parts by weight, preferably from 0.5 to 3 party by weight per 100 parts by weight of the elastomer (a).

As the polyfunctional compound (c), any compound that is reactive with the peroxy radical and the polymer radical can be used. Specific examples of the polyfunctional compound (c) are triallyl cyanurate, triallyl isocyanurate, triacryl formal, triacryl trimellitate, N,N'-m-phenylenebismaleimide, dipropargyl terephthalate, diallyl phthalate, tetraallyl terephthalamide, tris(diallylamine)-s-triazine, triallyl phosphite, N,N-diallyl acrylamide and the like.

The amount of the polyfunctional compound (c) is from 0.1 to 10 parts by weight, preferably from 0.5 to 5 parts by weight per 100 parts by weight of the elastomer (a).

In one embodiment of the present invention, the crosslinkable composition contains the silver compound as the additive (d). Specific examples of the silver compound include silver oxide, an inorganic silver salt of the formula:
AgZ
whereiN Z is a halogen atom, $NO_3^-$ and the like and an organic silver salt of the formula:
RCOOAg
wherein R is an alkyl group having 1 to 20 carbon atoms, an aryl group having 6 to 20 carbon atoms or an aralkyl group having 7 to 20 carbon atoms. The silver compound may be compounded with the fluorine-containing elastomer (a) by a per se conventional method, for example, co-coagulation from the dispersion of the elastomer (a) or mixing of the silver compound supported on a filler with the elastomer (a).

The amount of the silver compound is from 0.1 to 50 parts by weight, preferably from 1 to 20 parts by weight per 100 parts by weight of the elastomer (a).

In another embodiment of the present invention, a combination of the organic base and the porous filler

is used as the additive (d).

As the organic base, a base compound having a nitrogen or phosphorus atom in a molecule is preferably used. Specific examples of the organic base are as follows:

(i) a compound of the formula:

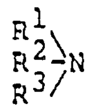 or 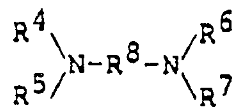

wherein $R^1$, $R^2$ and $R^3$ are the same or different and each an alkyl group having 1 to 20 carbon atoms provided that one of them may be a cycloalkyl group or two of them may form a cyclic group; $R^4$, $R^5$, $R^6$ and $R^7$ are the same or different and each a hydrogen atom or an alkyl group having 1 to 6 carbon atoms provided that a pair of $R^4$ and $R^6$ and/or a pair of $R^5$ and $R^7$ may form a cyclic group; and $R^8$ is an alkylene group having 1 to 21 carbon atoms, or its organic or inorganic salt,

(ii) a compound of the formula:

$R^{10}{}_3N^+R^{11}.X^-$ or $R^{10}{}_3N^+R^{12}N^+R^{10}{}_3.2X^-$

wherein $R^{10}$ is an alkyl group having 1 to 20 carbon atoms; $R^{11}$ is an alkyl group having 1 to 20 carbon atoms or an aralkyl group having 7 to 20 carbon atoms; $R^{12}$ is an alkylene group having 1 to 21 carbon atoms or a phenylenedialkylene group having 8 to 12 carbon atoms; and $X^-$ is an anion such as halide, hydroxylate, alkoxylate, carboxylate, phenoxide, sulfonate, sulfate, sulfite and carbonate,

(iii) a compound of the formula:

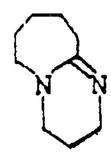 or 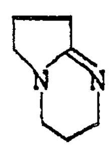

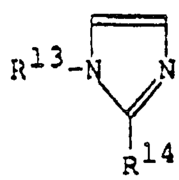 or 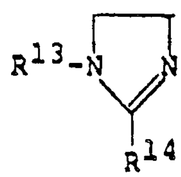

wherein $R^{13}$ is a hydrogen atom, an alkyl group having 1 to 20 carbon atoms or an aralkyl group having 7 to 20 carbon atoms; and $R^{14}$ is an alkyl group having 1 to 12 carbon atoms or an aryl group having 6 to 12 carbon atoms, or its organic or inorganic salt,

(iv) a compound of the formula:

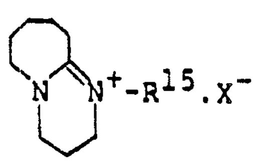 or 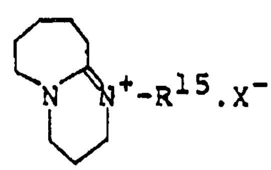

wherein $R^{15}$ is an alkyl group having 1 to 24 carbon atoms or an aralkyl group having 7 to 20 carbon atoms, and $X^-$ is the same as defined above,

(v) a compound of the formula:

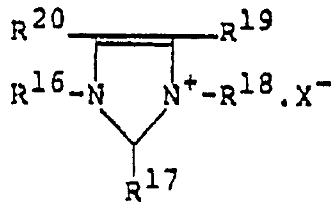

wherein $R^{16}$ is an alkyl group having 1 to 20 carbon atoms, a cycloalkyl group having 3 to 20 carbon atoms or an aralkyl group having 7 to 20 carbon atoms; $R^{17}$ is a hydrogen atom, an alkyl group having 1 to 12 carbon atoms, a cycloalkyl group having 3 to 12 carbon atoms, an aryl group having 6 to 12 carbon atoms, an aralkyl group having 7 to 15 carbon atoms, an ether group having 1 to 12 carbon atoms, a hydroxyl group, a carboxyl group, an alkoxycarbonyl group, an acyl group or an heterocyclic group having at least one heteroatom such as nitrogen and sulfur; $R^{18}$ is an alkyl group having 1 to 20 carbon atoms or an aralkyl group having 7 to 20 carbon atoms; $R^{19}$ and $R^{20}$ are the same or different and each a hydrogen atom or an alkyl group having 1 to 4 carbon atoms; and $X^-$ is the same as defined above,

(vi) a compound of the formula:

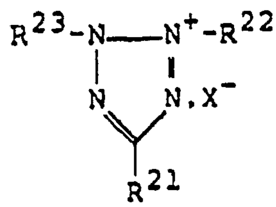

wherein $R^{21}$ is a hydrogen atom, an alkyl group having 1 to 6 carbon atoms, an aryl group having 6 to 15 carbon atoms, an aralkyl group having 7 to 15 carbon atoms, a hydroxyl group, a carboxyl group, an alkoxycarbonyl group, a cyano group, an amino group or a heterocyclic group having at least one heteroatom such as nitrogen or sulfur; $R^{22}$ and $R^{23}$ are the same or different and each an aryl group having 6 to 15 carbon atoms, an aralkyl group having 7 to 15 carbon atoms or a heterocyclic group having at least one heteroatom such as nitrogen or sulfur; and $X^-$ is the same as defined above,

(vii) a compound of the formula:

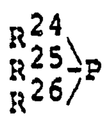

or

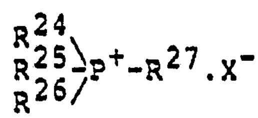

wherein $R^{24}$, $R^{25}$, $R^{26}$ and $R^{27}$ are the same or different and each an alkyl, aryl, aralkyl or alkenyl group having not more than 20 carbon atoms; and $X^-$ is the same as defined above,

(viii) an quaternary ammonium salt of the formula:

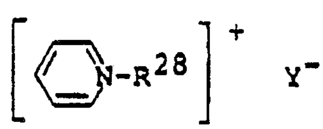

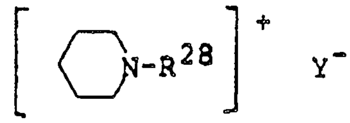

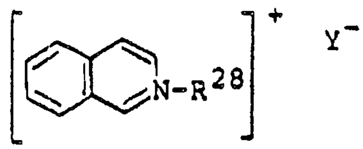

wherein $R^{28}$ is an alkyl group having 1 to 20 carbon atoms; and $Y^-$ is an anion selected from the group consisting hydroxide, halide, sulfate, sulfonate, carbonate, pentachlorothiophenolate, tetrafluoroborate, hexafluorosilicate, hexafluorophosphate, dimethylphosphate or carboxylate or dicarboxylate of alkyl, aralkyl or aryl having not more than 20 carbon atoms.

The salt of the compound (i) and (iii) includes salts with inorganic acids (e.g. hydrochloric acid, nitric acid, sulfuric acid, phosphoric acid, etc.) and with organic acids (e.g. acetic acid, propionic acid, oxalic acid, phenols, etc.).

The amount of the organic base is from 0.01 to 5 parts by weight, preferably 0.1 to 2 parts by weight per 100 parts by weight of the elastomer (a).

Specific examples of the porous filler are active carbon, active alumina, silica gel, molecular sieves, zeolite and the like.

The amount of the porous filler is from 0.01 to 50 parts by weight, preferably 0.1 to 10 parts by weight per 100 parts by weight of the elastomer (a).

The crosslinkable composition of the present invention may contain other additives such as a pigment, an extending agent, a lubricant, etc. in such an amount that the properties of the crosslinked elastomer, particularly CS are not deteriorated.

The fluorine-containing elastomer composition can be crosslinked under the conditions under which the conventional fluorine-containing elastomers are crosslinked. For example, after kneading, the crosslinkable composition is charged in a mold and press cured at a temperature of 100 to 200 °C under pressure of 20 to 100 $kg/cm^2G$ for 5 to 180 minutes and then oven cured in a furnace at a temperature of 150 to 300 °C for up to 400 hours.

## PREFERRED EMBODIMENTS OF THE INVENTION

The present invention will be illustrated by the following Examples in which "parts" are by weight.

### Example 1 and Comparative Examples 1-3

The components shown in Table 1 were well kneaded on rubber rolls and aged one day. After further kneading the aged composition on the rolls, the composition was press cured at 160 °C for 10 minutes and oven cured at 180 °C for 4 hours to obtain a sheet form elastomer sample.

With the sheet form sample, tensile stress at 100 % ($M_{100}$), tensile strength at break ($T_B$), elongation at break ($T_B$), hardness and their change after aging were measured according to JIS K 6301. The results are shown in Table 1.

Table 1

| Example No. | C. 1 | C. 2 | C. 3 | 1 |
|---|---|---|---|---|
| Component (parts) | | | | |
| G-902[1)] | 100 | 100 | 100 | 100 |
| MT-C[2)] | 20 | 20 | 20 | 20 |
| TAIC[3)] | 4 | 4 | 4 | 4 |
| 2.5-B[4)] | 1.5 | 1.5 | 1.5 | 1.5 |
| Metal oxide | -- | PbO | ZnO | $Ag_2O$ |
| | -- | 10 | 10 | 10 |
| Vulcanizability | | | | |
| $M_L$[5)] | 0.04 | 0.07 | 0.10 | 0.10 |
| $M_H$[6)] | 4.35 | 5.60 | 5.62 | 5.20 |
| $T_{10}$[7)] (min.) | 1.3 | 1.2 | 1.1 | 1.0 |
| $T_{90}$[8)] (min.) | 2.9 | 2.8 | 2.8 | 2.5 |
| Original state properties | | | | |
| $M_{100}$ (kgf/cm$^2$) | 32 | 35 | 35 | 35 |
| $T_B$ (kgf/cm$^2$) | 196 | 210 | 213 | 228 |
| $E_B$ (%) | 320 | 310 | 300 | 340 |
| Hs (points) | 72 | 72 | 73 | 71 |
| Properties after aging[9)] | | | | |
| $M_{100}$ (%) | -27 | -35 | -19 | -9 |
| $T_B$ (%) | -54 | -61 | -25 | -14 |
| $E_B$ (%) | +56 | +155 | +70 | +17 |
| Hs (points) | 0 | +2 | +1 | +2 |

Note: 1) DAI-EL G-902 (an iodine-containing fluoroelastomer manufactured by Daikin Industries, Ltd. a copolymer of vinylidene fluoride, tetrafluoroethylene and hexafluoropropylene).

2) Medium thermal carbon.

3) Triallyl isocyanurate.

4) 2,5-Dimethyl-2,5-di-(tert.-butylperoxy)hexane.

5) $M_L$: Minimum torque index.

6) $M_H$: Maximum torque index.

7) $T_{10}$: Induction time.

8) $T_{90}$: Optimum cure time.
$M_L$, $M_H$, $T_{10}$ and $T_{90}$ were measured with the Curestometer (manufactured by Nippon Synthetic Rubber Co., Ltd.) at 160°C.

9) Changes of the properties after aging the cross-linked elastomer at 250°C for 70 hours.

Example 2 and Comparative Examples 4 and 5

Silver oxide used in Example 2 was prepared as follows:

In a 500 ml flask, silver nitrate (14.7 g) was dissolved in water (200 g). To the solution, medium thermal carbon (100 g) was added and well stirred. To the mixture, a 5 % aqueous solution of potassium hydroxide was dropwise added while stirring till the pH of the mixture became alkali. Then, filtration and washing with water were repeated till the filtrate had the neutral pH to obtain silver oxide supported on medium thermal carbon.

The silver oxide composite was compounded with the components shown in Table 2, and a sheet form sample was prepared in the same manner as in Example 1. The properties of the sheet are shown in Table 2.

Table 2

| Example No. | 2 | C. 4 | C. 5 |
|---|---|---|---|
| Component (parts) | | | |
| G-902 | 100 | 100 | 100 |
| MT-C | 20 | 20 | 20 |
| TAIC | 4 | 4 | 4 |
| 2.5-B | 1.5 | 1.5 | 1.5 |
| Silver oxide | 2 | 2 | |
| Vulcanizability | | | |
| $M_L$ | 0.08 | 0.04 | 0.03 |
| $M_H$ | 5.6 | 4.11 | 4.47 |
| $T_{10}$ (min.) | 1.1 | 1.0 | 0.9 |
| $T_{90}$ (min.) | 2.5 | 2.1 | 2.0 |
| Original state properties | | | |
| $M_{100}$ (kgf/cm$^2$) | 30 | 30 | 29 |
| $T_B$ (kgf/cm$^2$) | 225 | 208 | 209 |
| $E_B$ (%) | 330 | 310 | 340 |
| Hs (points) | 69 | 68 | 68 |

Example 3 and Comparative Example 6

Silver oxide was co-coagulated with the elastomer from the dispersion as follows:

A 10 wt % aqueous solution of $AgNO_3$ was added to the dispersion of the elastomer (elastomer content: 20 wt%) in a predetermined ratio. To the mixture, a 5 % aqueous solution of potassium hydroxide was added while well stirring till pH reached 12 and then a 5 % aqueous solution of potash alum (100 ml) was added, followed by washing with water and drying to obtain a co-coagulated material of the fluorine-containing elastomer and silver oxide. To the co-coagulated material, the components shown in Table 3 were added and kneaded in the same manner as in Example 1 and the sheet form sample was prepared. The properties of the sample are shown in Table 3.

Table 3

| Example No. | 3 | C. 6 |
|---|---|---|
| **Component** | | |
| G-901 [1] | 100 [2] | 100 |
| MT-C | 20 | 20 |
| TAIC | 4 | 4 |
| 2.5-B | 1.5 | 1.5 |
| **Vulcanizability** | | |
| $M_L$ | 0.09 | 0.08 |
| $M_H$ | 4.30 | 4.18 |
| $T_{10}$ (min.) | 1.0 | 1.0 |
| $T_{90}$ (min.) | 2.6 | 2.5 |
| **Original state properties** | | |
| $M_{100}$ (kgf/cm$^2$) | 33 | 28 |
| $T_B$ (kgf/cm$^2$) | 214 | 214 |
| $E_B$ (%) | 320 | 350 |
| Hs (points) | 72 | 72 |
| **CS (%)** | | |
| At 200 °C | | |
| After 70 hours | 33 | 31 |
| After 116 hours | 44 | 59 |
| After 332 hours | 53 | 72 |
| Note: | | |

1) DAI-EL G-901 (an iodine-containing fluoroelastomer manufactured by Daikin Industries, Ltd. A copolymer of vinylidene fluoride, tetrafluoroethylene and hexafluoropropylene).

Examples 4-7 and Comparative Examples 7 and 8

The components shown in Table 4 were successively added and kneaded on the rubber rolls and aged one day. After further kneading the aged composition on the rolls, the composition was press cured at 160 °C for 10 minutes and oven cured at 180 °C for 4 hours to obtain a sheet form elastomer sample.

With the sheet form sample, tensile stress at 100 % ($M_{100}$), tensile strength at break ($T_B$), elongation at break ($T_B$) and hardness were measured according to JIS K 6301. The results are shown in Table 4.

Table 4

| Example No. | C. 8 | 4 | 5 | 6 | 7 | C. 7 |
|---|---|---|---|---|---|---|
| Component (parts) | | | | | | |
| G-902 | 100 | 100 | 100 | 100 | 100 | 100 |
| TAIC | 4 | 4 | 4 | 4 | 4 | 4 |
| 2.5-B | 1.5 | 1.5 | 1.5 | 1.5 | 1.5 | 1.5 |
| MT-C | 20 | 20 | 15 | 17 | 19 | 20 |
| Active carbon | -- | 5 | 5 | 3 | 1 | -- |
| DBN-B[1)] | 0.125 | 0.125 | 0.125 | 0.125 | 0.125 | -- |
| Vulcanizability | | | | | | |
| $M_L$ | 0.08 | 0.03 | 0.03 | 0.03 | 0.03 | 0.04 |
| $M_H$ | 4.18 | 4.33 | 4.10 | 4.30 | 4.63 | 4.35 |
| $T_{10}$ (min.) | 1.4 | 1.4 | 1.5 | 1.5 | 1.5 | 1.4 |
| $T_{90}$ (min.) | 2.8 | 4.0 | 4.0 | 3.7 | 3.6 | 3.0 |
| Original state properties | | | | | | |
| $M_{100}$ ($kgf/cm^2$) | 31 | 53 | 42 | 36 | 33 | 30 |
| $T_B$ ($kgf/cm^2$) | 192 | 163 | 167 | 169 | 177 | 212 |
| $E_B$ (%) | 320 | 240 | 250 | 260 | 280 | 350 |
| Hs (points) | 70 | 76 | 70 | 70 | 70 | 70 |
| CS (%) (200 °Cx70 hrs) | 39 | 22 | 18 | 20 | 25 | 27 |
| Note: | | | | | | |

1) 5-Benzyl-1,5-diazabicyclo[4.3.0]-5-nonenium chloride.

## Claims

1. A crosslinkable composition comprising:

(a) a fluorine-containing elastomer having iodine or bromine,

(b) an organic peroxide

(c) a polyfunctional compound and

(d) an additive selected from the group consisting of a silver compound and a combination of an organic base and a porous filler.

2. The crosslinkable composition according to claim 1, wherein the fluorine-containing elastomer (3) is a copolymer of 20 to 85 % by mole of vinylidene fluoride and at least one other fluorine-containing ethylenically unsaturated monomer and contains 0.01 to 5 % by weight of iodine or 0.05 to 1.5 % by weight of bromine.

3. The crosslinkable composition according to claim 1, wherein the fluorine-containing elastomer (a) is a copolymer comprising:

(i) 50 to 95 % by mole of repeating units derived from a fluoroolefin of the formula:

$CF_2=CXY$ (I)

wherein X and Y are the same or different and each a fluorine atom or a chlorine atom,

(ii) 50 to 5 % by mole of repeating units derived from a perfluoro(vinyl ether) of the formula:

$CF_2=CFO[CF_2CFX'-(CF_2)_m-O]_nR_f$ (II)

wherein $R_f$ is a perfluoroalkyl group having 1 to 12 carbon atoms, $X'$ is a fluorine atom or a trifluoromethyl group, n is an integer of 0 to 5, and m is 0 or 1,

(iii) 0 to 10 % by mole of repeating units of an alkyl vinyl ether of the formula:

$CF_2=CFO[CF_2CF(CF_3)O]_lR_f'-Y'$ (III)

wherein $R_f'$ is a perfluoroalkylene group having 1 to 12 carbon atoms or a perfluorophenylene group, $Y'$ is -COOR in which R is an alkyl group having 1 to 4 carbon atoms, -CN, -F, -Cl, -Br or -I, and l is an integer of 1 to 3, which contains 0.01 to 5 % by weight of iodine.

4. The crosslinkable composition according to claim 1, wherein the amount of the organic peroxide (b) is from 0.5 to 5 parts by weight per 100 parts of the fluorine-containing elastomer (a).

5. The crosslinkable composition according to claim 1, wherein the amount of the polyfunctional compound (c) is from 0.5 to 10 parts by weight per 100 parts of the fluorine-containing elastomer (a).

6. The crosslinkable composition according to claim 1, wherein the silver compound is used as the additive (d) and the amount of the silver compound is from 0.1 to 50 parts by weight per 100 parts of the fluorine-containing elastomer (a).

7. The crosslinkable composition according to claim 1, wherein the combination of the organic base and the porous filler is used as the additive (d), and the amount of the organic base is from 0.01 to 5 parts by weight and the amount of the porous filler is from 0.01 to 50 parts by weight per 100 parts of the fluorine-containing elastomer (a).